# EUROPÄISCHE PATENTANMELDUNG

(11) **EP 2 213 876 A1**
(43) Veröffentlichungstag der Anmeldung: **04.08.2010**
(21) Anmeldenummer: 09001465.5
(22) Anmeldetag: 03.02.2009
(51) Int. Cl.: F03D 11/00

(54) **Turm, insbesondere für eine Windturbine**

(71) Anmelder: Siemens Aktiengesellschaft, 80333 München (DE)
(72) Erfinder: Armbrecht, Achim, 26203 Wardenburg (DE); Wulff, Steffen, 28217 Bremen (DE)

(57) **Zusammenfassung**

Es wird ein Turm (3), insbesondere ein Turm (3) für eine Windturbine (1), zur Verfügung gestellt, der mit einem sich durch den Turm (3) erstreckenden begehbaren Innenraum (16), einer den Innenraum (16) begrenzenden Außenwand (15) sowie einer an der Außenwand (15) angeordneten Hindernis- oder Gefahrenbefeuerung, welche wenigstens eine Hindernis- oder Gefahrenwarnleuchte (13) umfasst, ausgestattet ist. In Montagehöhe der Hindernis- oder Gefahrenwarnleuchte (13) ist eine Montageöffnung (17) in der Außenwand (15) vorhanden, deren Abmessung derart an die Hindernis- oder Gefahrenwarnleuchte (13) angepasst ist, das sie einen Durchtritt der Hindernis- oder Gefahrenwarnleuchte (13) in den Innenraum (16) ermöglicht.

## Beschreibung

Die vorliegende Erfindung betrifft einen Turm mit einer Hindernis- bzw. Gefahrenbefeuerung. Daneben betrifft die Erfindung eine Windturbine mit einem derartigen Turm.

In Deutschland muss bei Türmen von Windkraftanlagen mit einer Gesamthöhe von über 150 Metern muss der Turm im Abstand von 45 Meter mit einer Befeuerung versehen werden, wobei bei jeder Montagehöhe mindestens vier Lampen über den Umfang des Turmes verteilt angeordnet sein müssen. Die in Deutschland geltenden Vorschriften zur Befeuerung von Windkraftanlagen sind in der Allgemeinen Verwaltungsvorschrift zur Kennzeichnung von Luftfahrthindernissen der Bundesregierung festgehalten.

Während die Installation der Befeuerung während des Aufbaus der Windkraftanlage ohne größeren Aufwand möglich ist, erfordert eine Reparatur bzw. Wartung der Befeuerung am Turm einen erheblichen Aufwand, da zum Erreichen der Befeuerung in der jeweiligen Montagehöhe entweder die Verwendung eines Hubsteigers, welcher den Monteur auf Montagehöhe befördert, oder der Einsatz von Spezialpersonal, etwa Seilkletterer, welche sich zum Durchführen der Wartung bzw. Reparatur von der Gondel her abseilen, nötig ist.

Es ist daher Aufgabe der vorliegenden Erfindung, einen Turm, insbesondere einen Turm für eine Windkraftanlage, zur Verfügung zu stellen, welcher eine Wartung bzw. eine Reparatur einer am Turm angebrachten Hindernis- oder Gefahrenbefeuerung ohne die Notwendigkeit eines Hubsteigers oder die Notwendigkeit von Spezialpersonal möglicht macht. Es ist eine weitere Aufgabe der vorliegenden Erfindung, eine vorteilhafte Windkraftanlage zur Verfügung zu stellen, in der die Wartung oder Reparatur einer am Turm befindlichen Hindernis- oder Gefahrenbefeuerung mit relativ wenig Aufwand möglich ist.

Die erste Aufgabe wird durch einen Turm nach Anspruch 1 gelöst, der insbesondere als Turm für eine Windkraftanlage ausgestaltet sein kann. Die zweite Aufgabe wird durch eine Windkraftanlage nach Anspruch 9 gelöst. Die abhängigen Ansprüche enthalten vorteilhafte Ausgestaltungen der Erfindung.

Ein erfindungsgemäßer Turm weist einen sich durch den Turm erstreckenden begehbaren Innenraum und eine den Innenraum begrenzende Außenwand auf. An der Außenwand ist eine Hindernis- oder Gefahrenbefeuerung angeordnet, welche wenigstens eine Hindernis- oder Gefahrenwarnleuchte umfasst. Außerdem ist in Montagehöhe der Hindernis- oder Gefahrenwarnleuchte eine Montageöffnung in der Außenwand vorhanden, deren Abmessung derart an die Hindernis- oder Gefahrenwarnleuchte angepasst ist, dass sie einen Durchtritt der Hindernis- oder Gefahrenwarnleuchte in den Innenraum ermöglicht.

Die vorliegende Erfindung baut darauf auf, dass insbesondere Türme für Windkraftanlagen in der Regel einen begehbaren Innenraum aufweisen, durch den zur Gondel aufgestiegen werden kann. In einem erfindungsgemäßen Turm kann dieser Innenraum auch vom Montagepersonal zur Wartung beziehungsweise Reparatur einer Hindernis- oder Gefahrenwarnleuchte benutzt werden. Dazu wird die Hindernis- oder Gefahrenwarnleuchte einfach durch die Montageöffnung ins Innere des Turms gezogen und dort vom Montagepersonal gewartet oder repariert. Da zum Warten beziehungsweise Reparieren der Hindernis- oder Gefahrenwarnleuchte weder ein Hubsteiger noch Spezialpersonal notwendig ist, führt der erfindungsgemäße Turm beispielsweise für Betreiber eines Windparks zu einer Reduktion der mit der Wartung beziehungsweise Reparatur verbundenen Kosten.

In einer vorteilhaften Ausgestaltung der Erfindung ist die Hindernis- oder Gefahrenwarnleuchte um eine Achse in ihre Betriebsstellung oder aus ihrer Betriebsstellung kippbar. Übliche Hindernis- oder Gefahrenwarnleuchten weisen in ihrer Betriebsstellung größere vertikale als laterale Abmessungen auf. Eine Öffnung, durch die die Leuchte in Betriebsstellung durchzuführen ist, muss mindestens die vertikale Abmessung der Leuchte aufweisen. Wenn die Leuchte hingegen um eine Achse aus ihrer Betriebsstellung gekippt werden kann, so braucht die Öffnung im Turm lediglich noch die lateralen Abmessungen der Leuchte zu berücksichtigen, die, wie bereits erwähnt, in der Regel geringer sind als die vertikale Abmessung. Die Montageöffnungen können daher kleiner gehalten werden, was unter Stabilitätsgesichtpunkten des Turms vorteilhaft ist. Jede Öffnung im Turm bedeutete nämlich eine Schwächung der Stabilität, wobei größere Öffnungen die Stabilität mehr schwächen als kleine. Kleine Montageöffnungen sind daher wünschenswert.

Um das Eindringen von Wasser, Tieren oder Gegenständen in das Innere des Turms durch die Montageöffnung zu verhindern, kann die Montageöffnung mit einer vom Innenraum her betätigbaren Abdeckung versehen sein. Diese Abdeckung kann auch eine Durchführung oder eine Steckverbindung für einen elektrischen Anschluss der wenigstens einen Hindernis- oder Gefahrenwarnleuchte aufweisen, so dass die elektrische Versorgung weitestgehend durch das Innere des Turms erfolgen kann.

Die Hindernis- oder Gefahrenfeuerung weist üblicherweise in einer Montagehöhe mehrere Hindernis- oder Gefahrenwarnleuchten auf, die über den Umfang des Turmes verteilt sind. Es besteht dann die Möglichkeit, im Rahmen der Erfindung je Hindernis- oder Gefahrenwarnleuchte eine Montageöffnung am entsprechenden Umfangsort der jeweiligen Hindernis- oder Gefahrenwarnleuchte in der Außenwand vorzusehen. Auf diese Weise ist jede Leuchte in der entsprechenden Montagehöhe leicht erreichbar, ohne dass hierfür eine technische Vorrichtung zum bewegen der Leuchten um den Umfang der Außenwand herum vorgesehen werden müsste. Alternativ besteht aber auch die Möglichkeit, in jeder Montagehöhe von Hindernis- oder Gefahrenwarnleuchten eine um den Umfang der Außenwand herum verlaufende Montageschiene vorzusehen, an der die Hindernis- oder Gefahrenwarnleuchten entlang der Schiene schiebbar angeordnet sind. In dieser Ausgestaltung reicht eine einzige Montageöffnung je Montagehöhe aus, wobei eine zu wartende oder zu reparierende Hindernis- oder Gefahrenwarnleuchte über die Schiene zur Montageöffnung verfahren wird. Gegebenenfalls müssen hierbei weitere Leuchten verschoben werden, um der zu wartenden beziehungsweise zur reparierenden Leuchte den Zugang zur Montageöffnung zu ermöglichen. Statt auf einer Schiene verschiebbar angeordnet zu sein, können die Montageleuchten auch ortsfest an einem um den Umfang der Außenwand herum verlaufenden, drehbar gelagerten Montagering angeordnet sein. Um eine Hindernis- oder Gefahrenwarnleuchte vor die Montageöffnung zu bringen, wird dann der Montagering gedreht. Auch in diesem Fall ist eine einzige Montageöffnung ausreichend. Wenn die Verschiebbarkeit der Leuchten beziehungsweise die Drehbarkeit des Montageringes nicht um 360° erfolgen kann oder soll, besteht auch die Möglichkeit, beispielsweise zwei in der Außenwand einander gegenüber liegende Montageöffnungen vorzusehen und die Verschiebbarkeit der Leuchten entlang der Schiene beziehungsweise die Drehbarkeit des Montageringes nur um 180° zu gewährleisten.

Wenn die Leuchten an einer Schiene beziehungsweise an einem Montagering angeordnet sind, können auch die elektrischen Versorgungsleitungen für die Leuchten durch die Schienen beziehungsweise den Montagering verlaufen. Die elektrischen Versorgungsleitungen können so geschützt angeordnet werden.

Eine erfindungsgemäße Windkraftanlage weist einen erfindungsgemäßen Turm und eine Hindernis- oder Gefahrenbefeuerung, welche wenigstens eine am Turm angeordnete Hindernis- oder Gefahrenwarnleuchte umfasst, auf. Die mit der erfindungsgemäßen Windkraftanlage verbundenen Vorteile sind identisch mit oder ergeben sich aus den bereits zuvor beschriebenen Vorteilen des erfindungsgemäßen Turms.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Figur 1 zeigt eine Windturbine mit einer Hindernis- oder Gefahrenbefeuerung.
Figur 2 zeigt eine vertikalen Schnitt durch den Turm einer Windturbine mit einer Hindernis- oder Gefahrenbefeuerung.
Figur 3 zeigt einen horizontalen Schnitt durch den Turm einer Windturbine mit einer Hindernis- oder Gefahrenwarnbefeuerung.

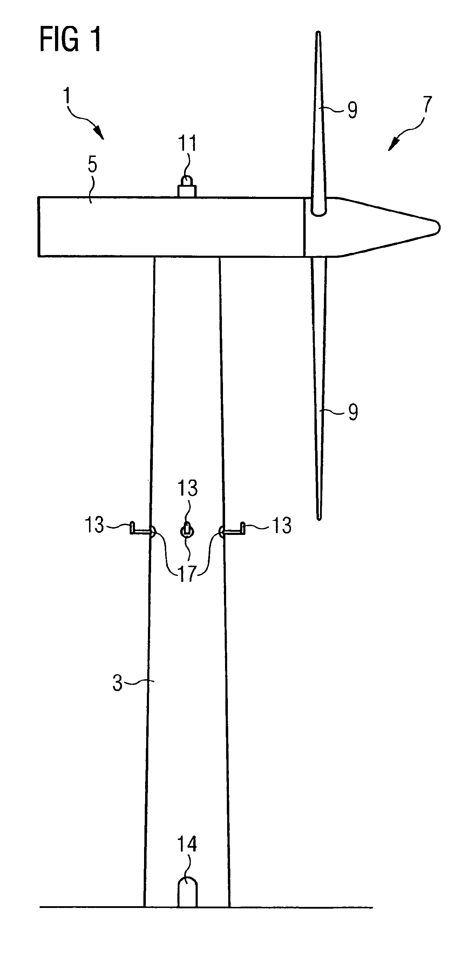

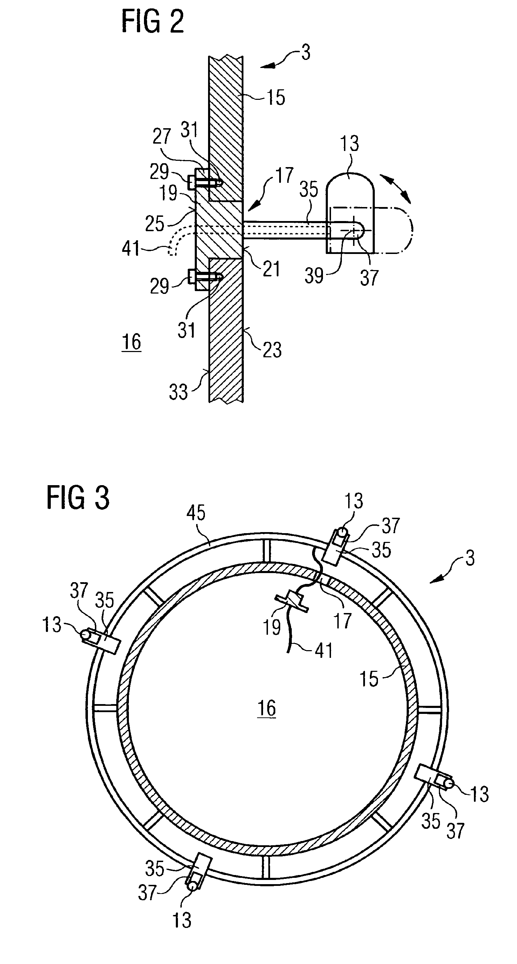

Ein Ausführungsbeispiel für eine Windturbine mit einem erfindungsgemäßen Turm wird nachfolgend mit Bezug auf die Figuren 1 und 2 beschrieben. Figur 1 zeigt hierbei die Windturbine und die Anordnung der Hindernis- oder Gefahrenwarnleuchten, Figur 2 einen vertikalen Schnitt durch die Außenwand des Turms im Bereich einer Hindernis- oder Gefahrenwarnleuchte.

Die Windturbine 1 umfasst als Hauptbestandteile einen Turm, eine am oberen Ende des Turms 3 horizontal drehbar gelagerte Gondel 5 sowie einen an der Gondel 5 um eine im wesentlichen horizontal verlaufende Achse drehbar gelagerten Rotor 7, der im vorliegenden Ausführungsbeispiel drei Rotorblätter 9 umfasst. Der Rotor 7 braucht aber nicht notwendigerweise drei Rotorblätter 9 zu umfassen. Die Zahl der Rotorblätter kann statt dessen kleiner oder größer als bei dem in Figur 7 gezeigten Rotor 7 sein. Hauptsächlich kommen heutzutage jedoch zweiblättrige Rotoren und insbesondere dreiblättrige Rotoren zur Anwendung. Der Rotor 7 ist zum Erzeugen elektrischer Leistung über eine in der Figur nicht dargestellte Welle mit dem Läufer eines in der Gondel 5 angeordneten Generators (ebenfalls nicht dargestellt) verbunden.

Auf der Oberseite der Gondel 5 weist die Windturbine 1 eine oder mehrere Hindernis- oder Gefahrenwarnleuchten 11 auf. Bei der in der Figur dargestellten Windkraftanlage sind außerdem Hindernis- oder Gefahrenwarnleuchten 13 über den Umfang des Turms 3 verteilt. Beispielsweise ist in Deutschland vorgeschrieben, dass bei Windturbinen mit einer Gesamthöhe über 150 m der Turm 3 im Abstand von 45 m mit einer Befeuerung mit mindestens vier Lampen, die über den Umfang des Turms verteilt sind, zu versehen ist. Auch wenn die Vorschriften in anderen Ländern hiervon abweichen können, ist der Turm einer Windturbine auch in anderen Ländern in der Regel ab einer gewissen Höhe der Windturbine mit einer Hindernis- oder Gefahrenbefeuerung zu versehen.

An seinem bodenseitigen Ende besitzt der Turm 3 eine vorzugsweise mit einer Tür versehenen Zugangsöffnung 14. Diese ermöglicht den Zugang zu einem sich durch den Turm erstreckenden begehbaren Innenraum 16, der mit einer in der Regel bis zur Gondel 5 führenden Treppe oder Leiter versehen ist.

Ein vertikaler Schnitt durch die Außenwand 15 des Turms ist in Figur 2 dargestellt. Die Außenwand 15 weist eine Öffnung 17, die mit einer Abdeckung 19 verschlossen ist. Diese ist so ausgestaltet, dass ihre Außenseite 21 mit der Außenseite 23 der Außenwand 15 des Turms 3 weitgehend fluchtet. Das Fluchten ist zwar nicht unbedingt notwendig, jedoch vorteilhaft im Hinblick darauf, dass Angriffsflächen beispielsweise für Witterungseinflüsse oder Schmutzablagerungen an der Außenseite des Turms möglichst gering gehalten werden können. Insbesondere könnten Vorsprünge dazu führen, dass sich Wasser auf den Vorsprüngen sammelt, welches dann zwischen der Abdeckung und dem Rand der Öffnung 17 in den Innenraum 16 des Turms gelangen könnte, wenn keine geeignete Abdichtung vorhanden ist. Bei mit der Außenwand fluchtender Abdeckung kann die Dichtung einfacher ausgestaltet sein oder sogar ganz entfallen.

An der Innenseite 25 der Abdeckung 19 ist eine Flansch 27 mit Durchgangsöffnungen angeordnet, durch die Schrauben 29 hindurchgeführt sind. Die Schrauben greifen in Gewindebohrungen 31 ein, die um die Öffnung 17 herum von der Innenseite 33 aus in die Außenwand 15 des Turms 3 eingebracht sind.

An der Außenseite 21 ist ein Halter 35 angeordnet, dessen von der Abdeckung 19 entferntes Ende in zwei Haltearme 37 mündet, zwischen denen die Hindernis- oder Gefahrenwarnleuchte 13 um eine Schwenkachse 39 schwenkbar angeordnet ist. Außerdem ist im Inneren des Halters 35 eine elektrische Versorgungsleitung 41 zur Versorgung der Leuchte 13 mit Strom vorhanden. Die elektrische Versorgungsleitung 41 ist durch eine Durchführöffnung in der Abdeckung 19 in den Innenraum 16 des Turms 3 geführt, wo sie zu einem elektrischen Versorgungsanschluss weitergeführt ist.

Zum Montieren der Leuchte 13 an der Außenseite des Turms 3 wird diese um die Schwenkachse 9 in eine Montagestellung gebracht (in Figur 2 gestrichelt dargestellt) in der Sie durch die Öffnung 17 in der Außenwand 15 des Turms 3 hindurchgeführt werden kann. Während des Durchführens befindet sich die Leuchte 13 im wesentlichen in einer horizontalen Stellung. Nachdem die Leuchte 13 durch die Öffnung 17 hindurchgeführt ist, wird sie in die in Figur 2 dargestellte Betriebsstellung geschwenkt. Anschließend wird die Abdeckung 19 mit der Außenwand 15 verschraubt. Falls das Schwenken der Leuchte 13 mittels eines vom Inneren des Turms 3 aus betätigbaren Antriebs erfolgt, kann auch zuerst die Abdeckung 19 mit der Außenwand 15 verschraubt werden, bevor die Leuchte 13 in die Arbeitsposition geschwenkt wird. Soll die Leuchte 13 zu Wartungs- oder Reparaturzwecken zugänglich gemacht werden, so kann sie nach Schwenken in die Montageposition wieder den Innenraum 16 des Turms 3 eingeholt werden, wo sie dann der Wartung beziehungsweise der Reparatur zugänglich ist.

Im beschriebenen Ausführungsbeispiel sind alle am Turm 3 angeordneten Hindernis- oder Gefahrenwarnleuchten wie mit Bezug auf Figur 2 beschrieben montiert. Es sei an dieser Stelle darauf hingewiesen, dass die Hindernis- oder Gefahrenwarnleuchte 13 nicht notwendigerweise schwenkbar ausgebildet sein muss, wie dies im beschriebenen Ausführungsbeispiel der Fall war. Stattdessen kann die Leuchte 13 auch in der in Figur 2 dargestellten Betriebsstellung fixiert sein. In diesem Fall ist die Öffnung 17 so groß zu wählen, dass die Leuchte 13 in der Arbeitsstellung hindurchgeführt werden kann. Da eine Öffnung in der Außenwand 15 des Turms 3 aber grundsätzlich eine Schwächung der Wand 15 darstellt, ist es vorteilhaft, wenn die Öffnung 17 so klein wie möglich gehalten wird. Die schwenkbare Ausgestaltung der Leuchte 13 ermöglicht es, die Abmessung der Öffnung 17 auf ein Mindestmaß zu reduzieren.

Ein zweites Ausführungsbeispiel für eine Windturbine 1 mit einem erfindungsgemäßen Turm 3 ist in Figur 3 dargestellt. Die Figur zeigt einen horizontalen Schnitt durch den Turm im Bereich der Hindernis- oder Gefahrenbefeuerung.

Im Unterschied zu der mit Bezug auf die Figuren 1 und 2 beschriebenen Ausführungsform, in der für jede Hindernis- oder Gefahrenwarnleuchte 13 eine eigene Öffnung 17 in der Außenwand 15 des Turms 3 vorhanden war, ist in dem mit Bezug auf Figur 3 beschriebenen Ausführungsbeispiel in jeder Montagehöhe, in der Hindernis- oder Gefahrenwarnleuchten 13 vorhanden sind, jeweils nur eine Öffnung 17 zum Durchführen der Hindernis- oder Gefahrenwarnleuchten 13 vorhanden. Die Hindernis- oder Gefahrenwarnleuchten 13 sind statt wie im ersten Ausführungsbeispiel an den Abdeckungen 19 an einer sich um den Umfang der Außenwand 15 erstreckenden Ringschiene 45 verfahrbar angeordnet. Zur Montage werden die Halter 35 mit den daran angeordneten Leuchten 13 vom Innenraum 16 aus durch die Öffnung 17 in der Außenwand 15 des Turms 3 hindurchgeführt und an der Ringschiene 45 angeordnet. Anschließend werden sie beispielsweise mittels eines in den Halter 35 integrierten elektrischen Antriebs zu ihrer Position am Umfang des Turms 3 gefahren. Wenn eine Hindernis- oder Gefahrenwarnleuchte 13 repariert oder gewartet werden soll, so wird der Halter 35 mit der daran angeordneten Leuchte 13 so weit entlang der Schiene 45 verfahren, bis er sich vor der Öffnung 17 in der Außenwand 15 des Turms 3 befindet. Das Service- oder Montagepersonal kann dann den Halter 35 mit der Leuchte von der Schiene 45 demontieren und durch die Öffnung 17 einholen. Alternativ besteht die Möglichkeit, die Leuchte 13 vom Halter zu demontieren und nur die Leuchte einzuholen.

Auch im zweiten Ausführungsbeispiel kann die Leuchte 13 wie im ersten Ausführungsbeispiel schwenkbar angeordnet sein. Im zweiten Ausführungsbeispiel ist jedoch zu beachten, dass das Montagepersonal den Halter 35 durch die Öffnung 17 hindurch zur Demonage erreichen können muss. Dem ist bei der Wahl der Abmessung der Öffnung 17 Rechnung zu tragen.

Wie im ersten Ausführungsbeispiel ist eine Abdeckung 19 vorhanden, die im wesentlichen der Abdeckung aus Figur 2 entspricht, jedoch ohne den an der Außenseite 21 montierten Halter 35. Durch die Abdeckung 19 ist eine elektrische Versorgungsleitung 41 geführt, die jedoch anders als im ersten Ausführungsbeispiel nicht in den Halter 35 mündet, sondern in die Ringschiene 45. Die Halter mit den daran angeordneten Leuchten 13 werden dann über die Ringschiene 45 mit elektrischer Leistung versorgt. Alternativ besteht auch die Möglichkeit, die Abdeckung 19 mit einer elektrischen Steckverbindung auszugestalten, so dass eine Kabeldurchführung durch die Abdeckung 19 nicht nötig ist. Gleiches gilt für die Abdeckung im ersten Ausführungsbeispiel.

In einer Abwandlung des in Figur 3 dargestellten Ausführungsbeispiels sind die Halter 35 nicht entlang der Ringschiene 45 beweglich. Statt dessen sind sie an einer Ringschiene lösbar fixiert, die selbst um den Turm 3 herum drehbar gelagert ist. Zum Montieren beziehungsweise Demontieren einer Hindernis- oder Gefahrenwarnleuchte 13 wird dann die Ringschiene so lange um den Turm 3 herum gedreht, bis sich die entsprechende Leuchtenposition vor der Öffnung 17 befindet. Das Drehen kann manuell oder mittels eines geeigneten Antriebs, beispielsweise eines elektrischen Antriebs, erfolgen. Im Übrigen unterscheidet sich die Abwandlung nicht von den in Figur 3 dargestellten Ausführungsbeispiel.

Der erfindungsgemäße Turm ermöglicht durch die Nutzung einer Montageöffnung im Turm eine im Vergleich zum Stand der Technik einfachren Service von Hindernis- oder Warnbefeuerungen, der ohne Hubsteiger oder Spezialpersonal wie Seilkletterer auskommt.

## Patentansprüche

1. Turm (3) mit einem sich durch den Turm (3) erstreckenden begehbaren Innenraum (16) und einer den Innenraum (16) begrenzenden Außenwand (15) sowie einer an der Außenwand (15) angeordneten Hindernis- oder Gefahrenbefeuerung, welche wenigstens eine Hindernis- oder Gefahrenwarnleuchte (13) umfasst,
**dadurch gekennzeichnet, dass**
in Montagehöhe der Hindernis- oder Gefahrenwarnleuchte (13) eine Montageöffnung (17) in der Außenwand (15) vorhanden ist, deren Abmessung derart an die Hindernis- oder Gefahrenwarnleuchte (13) angepasst ist, das sie einen Durchtritt der Hindernis- oder Gefahrenwarnleuchte (13) in den Innenraum (16) ermöglicht.

2. Turm (3) nach Anspruch 1,
**dadurch gekennzeichnet, dass**
die Hindernis- oder Gefahrenwarnleuchte (13) um eine Achse Kippbar ist.

3. Turm (3) nach Anspruch 1 oder Anspruch 2,
**dadurch gekennzeichnet, dass**
jede Montageöffnung (17) mit einer vom Innenraum (16) her betätigbaren abnehmbaren Abdeckung (19) versehen ist.

4. Turm (3) nach Anspruch 3,
**dadurch gekennzeichnet, dass**
die Abdeckung (19) eine Durchführung oder Steckverbindung für einen elektrischen Anschluss (41) der wenigstens einen Hindernis- oder Gefahrenwarnleuchte (13) aufweist.

5. Turm (3) nach einem der Ansprüche 1 bis 4,
**dadurch gekennzeichnet, dass**
die Hindernis- oder Gefahrenbefeuerung in einer Montagehöhe mehrere über den Umfang des Turms (3) verteilte Hindernis- oder Gefahrenwarnleuchten (13) aufweist und je Hindernis- oder Gefahrenwarnleuchte (13) eine Montageöffnung (17) am entsprechenden Umfangsort der jeweiligen Hindernis- oder Gefahrenwarnleuchte (13) in der Außenwand (15) vorhanden ist.

6. Turm (3) nach einem der Ansprüche 1 bis 4,
**dadurch gekennzeichnet, dass**
die Hindernis- oder Gefahrenbefeuerung in einer Montagehöhe mehrere über den Umfang des Turms (3) verteilten Hindernis- oder Gefahrenwarnleuchten (13) aufweist und in jeder Montagehöhe eine um den Umfang der Außenwand (15) herum verlaufende Montageschiene (45) vorhanden ist, an der die Hindernis- oder Gefahrenwarnleuchten (13) entlang der Schiene (45) verschiebbar angeordnet sind.

7. Turm (3) nach einem der Ansprüche 1 bis 4,
**dadurch gekennzeichnet, dass**
die Hindernis- oder Gefahrenbefeuerung in einer Montagehöhe mehrere über den Umfang des Turms (3) verteilten Hindernis- oder Gefahrenwarnleuchten (13) aufweist und in jeder Montagehöhe ein um den Umfang der Außenwand (15) herum verlaufender, drehbar gelagerte Montagering vorhanden ist, an dem die Hindernis- oder Gefahrenwarnleuchten (13) angeordnet sind.

8. Turm (3) nach Anspruch 6 oder Anspruch 7,
**gekennzeichnet durch**
eine **durch** die Schiene (45) bzw. den Montagering verlaufende elektrische Versorgungsleitung (41) für die Hindernis- oder Gefahrenwarnleuchten (13).

9. Windkraftanlage (1) mit einem Turm (3) nach einem der Ansprüche 1 bis 9 und einer Hindernis- oder Gefahrenbefeuerung, welche wenigstens eine am Turm (3) angeordnete Hindernis- oder Gefahrenwarnleuchte (13) umfasst.
